# EUROPEAN PATENT APPLICATION

(11) **EP 2 530 852 A1**
(43) Date of publication of application: **05.12.2012**
(21) Application number: 11168717.4
(22) Date of filing: 03.06.2011
(51) Int. Cl.: H04B 7/185, B60R 16/03

(54) **Design and implementation of power supply system for communication equipment in a vehicle providing mobile service coverage for a moving convoy using satellite -bts- to- bsc link.**

(71) Applicant: Emirates Telecommunications Corporation, Abu-Dhabi (AE)
(72) Inventor: Bin Alwan, Ali Hamad Ali Nasser, ABU-DHABI (AE); Al Hammdi, Mohamed Ali Abdulla, ABU-DHABI (AE); Al Ali, Nasser Ali Sultan Obaid Abayed, ABU-DHABI (AE); Harmoodi, Ali Hassan Abdulla Hassan AlQatan, DUBAI (AE); Al Suwaidi, Nasser Ahmed Sultan Humaid Mater, ABU-DHABI (AE); Philip, Jacob, DUBAI (AE); Al Marzooqi, Abu Baker Mohamed, ABU-DHABI (AE); Hameed, Mohammed Kunju, ABU-DHABI (AE)
(74) Representative: Robba, Pierpaolo

(57) **Abstract**

The invention relates to a Design and Implementation of Power Supply system for communication equipment in a vehicle providing mobile service coverage for a moving Convoy using Satellite -BTS- to- BSC link.

## Description

### TECHNICAL FIELD

The present invention relates to Design and Implementation of Power Supply system for communication equipment in a vehicle providing mobile service coverage for a moving Convoy using Satellite -BTS- to- BSC link.

### BACKGROUND ART

Mobile communication Service is provided all over the world by Global System for Mobile Communication (GSM). This Service allows both speech and Data to be communicated across the inter connected network. It is made possible through a chain of Base Transceiver Station (BTS) and a Base Station Controller (BSC). The BTS consists of communication equipment for providing wireless communication between customer handset (Mobile Station) and the GSM Network. BTS is normally having a huge tower mounted with Communication antenna and associated Transmit /Receive equipments in an enclosure. Each BTS covers certain fixed cell area only. In order to have wide coverage, the number of BTS has to be increased. It is not economical to provide more BTS to cover the entire area; hence coverage is designed only for more populated area. When the customer is in the vicinity of this coverage area communication is possible. The signal transmitted by the handset (Mobile station) is picked up by the BTS and transmitted back to the GSM network, so as to reach the desired customer at the distant end. Similarly the signal transmitted back from the BTS is received at the handset and the communication link with the distant customer is established.

When a subscriber is in need of mobile communication out side this coverage area, the existing system fails to provide communication. Then the only way to provide communication under this condition is either to move the BTS along with the Traveler or establish more BTS or Roaming arrangement with other operators.

All communication equipments with its power supplies are operated in a fixed location under protected environment. So in the prior art BTS is not moved from its fixed position and wired commercial power is used for all communication equipments. Here Power arrangement was not critical. But when used in a moving environment wired power connection is not at all possible. Hence the Power supply needs to be designed to meet this requirement.

Some of the problems and drawbacks in connection with the prior art are hereinafter briefly summarized.

BTS (Base Transceiver Station) is operated in fixed location and is not movable in the conventional system. Hence the coverage is limited to defined cell area only. In order to provide an uninterrupted communication, a large network of BTS is required all over the area to be covered. It is economically not viable. If the subscriber goes out of this coverage area, communication using GSM becomes impossible.

To keep the subscriber connected, the BTS with its communication equipment has to be moved along with the traveler. In the prior art this was not possible due to fixed nature of BTS and its associated equipments. More over all these equipments are powered from fixed commercial power source. So powering the communication equipment for a moving environment was not possible in the prior art. This was the major defect in the prior art.

### BRIEF SUMMARY OF THE INVENTION

The existing Global System Mobile communication provides the means of communication to people on the move locally and internationally by way of roaming arrangement with different mobile operators across the globe. Coverage is also limited with the individual operator. In the new invention, Mobile communication is provided to the subscriber through the same domestic operator either from local or international destination. No roaming arrangement is required with any other operator. The convoys moving to various locations can access his domestic network by using this system. Coverage is always made available by moving BTS with the convoy.

In order to power the moving BTS, fixed commercial power solution is not practical. Hence power supply is specially designed and implemented in the mobile service system to provide power to the equipments with out depending on the commercial source. This is achieved by generating required power internally by using vehicle alternators along with battery banks and a set of inverters. Provision is designed to switch power between internal or external source while BTS is not in motion but with in the proximity of commercial power.

### DETAILED DESCRIPTION OF THE INVENTION

Global System Mobile communication (GSM) is used all over the world as the means of communication to people on the move. Roaming arrangement is made with other operators across the globe to provide communication to the customers who are out of their domestic network. This is also limited to a predefined territory decided by the particular mobile operator. Communication is lost when the subscriber is out of that particular territory. To make it more clear, GSM service is provided all over the world, from fixed BTS. These Base Transceiver Stations (BTS) are controlled by Base Station Controllers (BSC). Each BTS covers only a predefined location. Handover between BTS is carried out when the customer moves out from one location to other. This is because of the limited cell coverage. But when there is no BTS cell coverage, communication is lost practically.

The new invention provides an effective solution for the above problem and communication is made possible while moving anywhere. The idea is conceived for providing mobile communication solution for the convoy moving to various destinations. The convoy is always linked to their domestic network operator through Satellite - BTS -to -BSC link. This idea can be utilized to meet the requirement of any potential customer who is on the move.

The technique adopted for providing mobile coverage is based on our expertise in Satellite communication and GSM applications. It is decided to combine these technologies together to provide a viable solution on the move. The basic idea is to provide uninterrupted coverage, creating a coverage pattern using a single BTS which is moving with the traveler. This BTS is always linked through satellite to the assigned BSC at the home destination.

By incorporating the technology of Satellite Communication- BTS to BSC link and technique of satellite tracking, achieved a practical solution to implement the above idea successfully.

The Mobile coverage is provided to the customer irrespective of his location. The system is capable of transmitting voice/data to the public network through Satellite- BTS-to- BSC link. In order to create a moving coverage pattern to follow the convoy, a moving BTS with the traveler is designed in a transportable vehicle. A 4wheel drive vehicle is selected for implementing the design so that it can move easily in any uneven terrain.

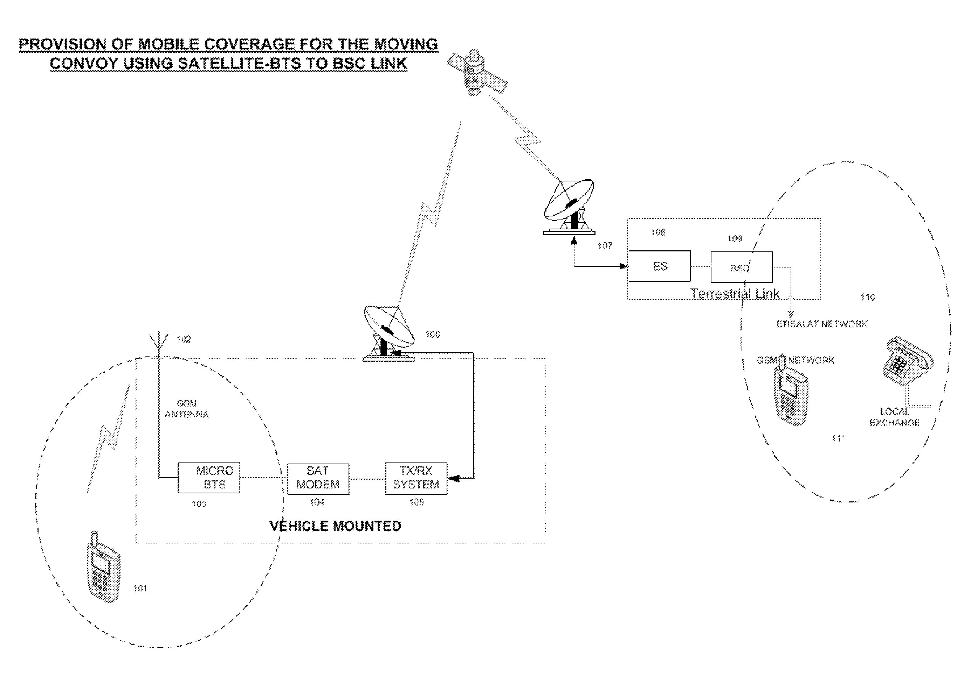

The basic principle of implementing mobile coverage moving with convoy is shown in Figure 1. The BTS is housing the radio transceivers which transmits and receives signal on the cells allocated frequencies. This in turn communicates with its BSC at the home location through the satellite link as shown in Figure 1. The BSC manages the radio resource of the BTS and also the connection between the Mobile station (MS) and the external network subsystem. The BSC is interconnected to the Mobile switching center (MSC). It acts as the normal switching node for the mobile or land line telephone in the home network. The detailed description of the schematic in Figure 1 is provided in the subsequent section. All the power generating equipments are optimally designed and accommodated in the limited internal space of the vehicle.

The signal transmitted from the Mobile station (MS) 101 is picked up by the GSM Omini Antenna 102 as shown in Figure 1. The signal is processed by the Micro BTS 103 and is passed to the satellite modem 104. The modem output, the Intermediate Frequency (IF) is up converted and amplified by Block up Converter (BUC) in the TX/RX system 105 to desired satellite communication frequency and then transmitted through the Satellite communication Antenna 106. The Signal is received by the distant Earth station 107, fed to Earth Station (ES) receive system 108, where it is down converted and demodulated to the desired base band frequency. This base band signal is transmitted to its Base Station controller (BSC) 109. There the signal is processed and switched to the Public network 110, and routed to the desired subscribe 111. The reverse process takes place for receiving the Signal by the transportable Vehicle. The received signal is re transmitted by the omni antenna to the customer handset 101, who is in the vicinity of the radiating range of the Micro BTS.

In order to operate the above systems effectively, Power Supply is essential. Since the requirement is for a continuously moving vehicle, it cannot be met with external wired power supply system, so it is planned to generate the power with in the vehicle itself. The implementation method with appropriate diagram is explained below.

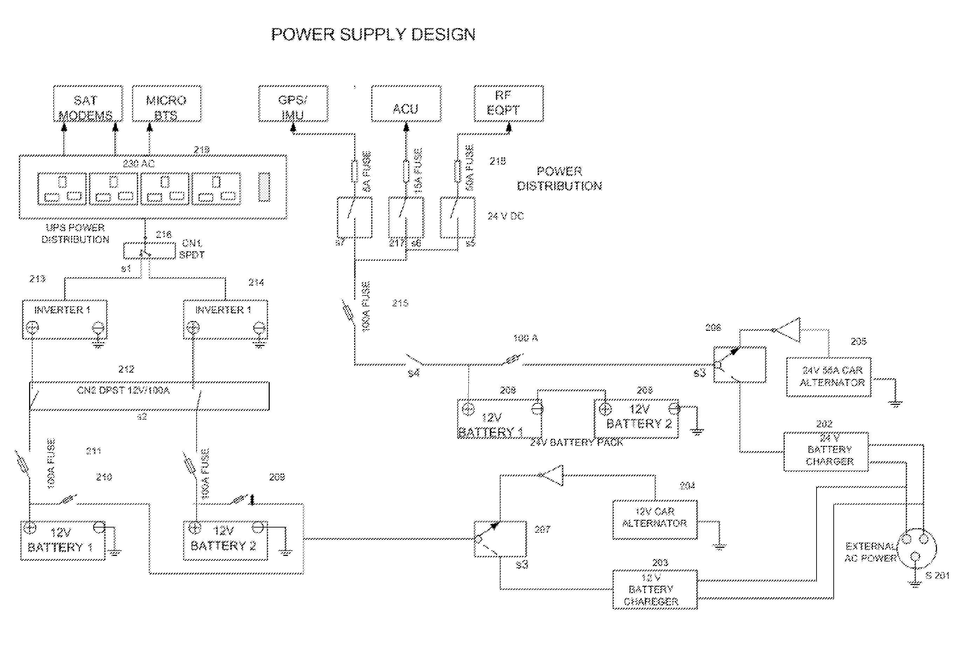

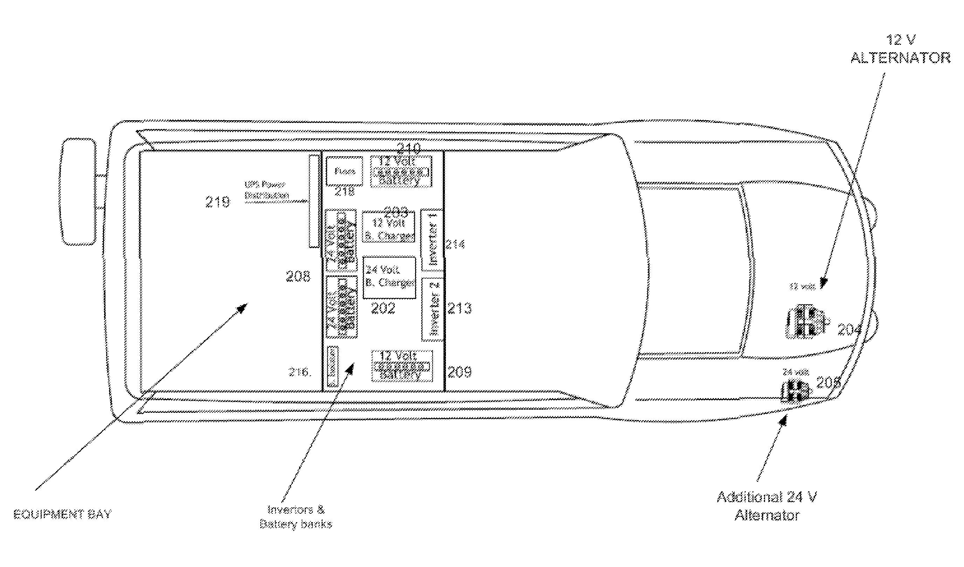

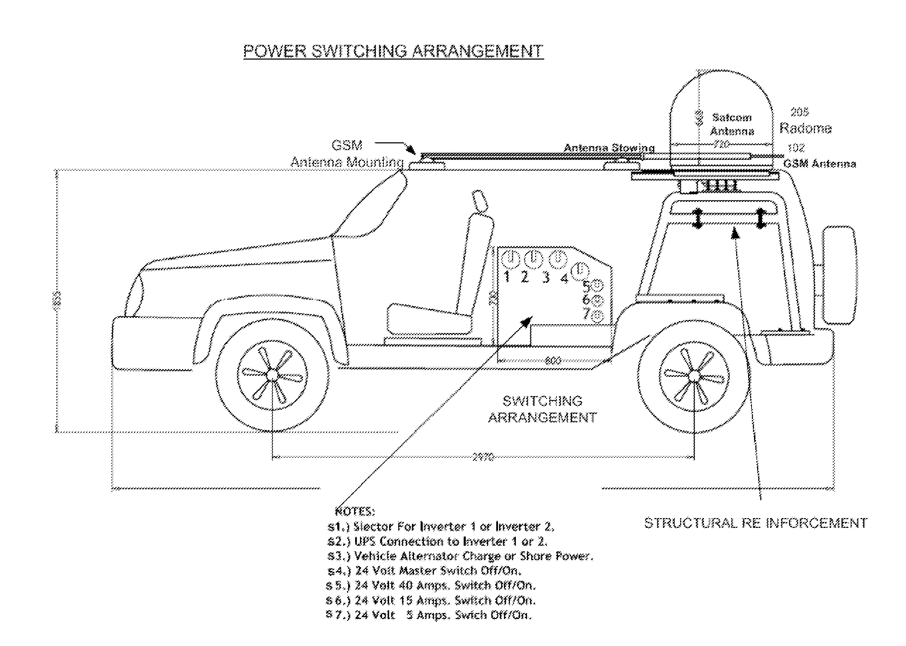

The mobile communication equipments have varied power requirements. Satellite modem 104 and micro BTS 103 operates on 230V AC power. RF Equipments, Antenna Control unit (ACU), Global Positioning System (GPS) and Inertial Measurement Unit (IMU) operate on 24V DC power. The entire power requirement has to be met from the internal resources. To generate 230V AC, a combination of 12V car alternator and inverter is used. As detailed in Figure 2, the car alternator 204 is coupled to the engine to generate 12V which is connected to 12V batteries 209 through a selector switch S3 207. The 12V DC output from the battery is fed to inverters 213/214 via a DPST switch S2 212. 12 Volt DC input to the inverter generates 230V AC out put, which is in turn fed to power distribution board 219 via switch S1 216. AC power for the equipment is fed from this distributor 219. Protective fuse of 100 Amps provided along the path. The battery output is simultaneously fed to main and standby inverters as shown in Figure 2, Inverter Output is selected using an SPDT Switch 216 either Inverter 1 or Inverter 2 as required. Inverters can be completely isolated by using input selection DPST switch S2 212. 24V DC power required to operate Antenna controller, GPS, IMU and RF equipments. This is generated using an additional 24V alternator 205 coupled to the engine and placed inside vehicle bonnet. The 24V alternator output is converted to DC and connected to the Battery bank 208 via SPDT switch 206. Two 12V batteries are connected in series to produce 24V DC. This is further protected by 100 Amps fuse and a switch S4. 24V DC is connected to a set of circuit breakers S5 to S7, so that the power can be independently switched to the respective equipments. Provision is made to switch external power source when the vehicle is not in motion. Battery charger 12V 203 and 24V 202 is incorporated to provide 12V and 24V DC to the respective power systems depending on the availability of external power s201. The physical locations of all these components are shown in Figure 3. A single switch S3 is used to select external or internal power source. Power switching arrangement is shown in Figure 4. This system provides an efficient power system for the equipments on board. External power source can be plugged in thru S 201 when the system is not in motion.

It will be hereinafter described how to use the invention

This is a self contained Communication solution for providing mobile connectivity irrespective of conventional GSM Coverage, extremely useful for convoy moving to different destinations with out depending on any local mobile operator for their immediate use. It compliments the absence of GSM coverage and provides instant communication facility to any motorable locations using the cell coverage area of the BTS on the vehicle. Provision of mobile coverage for the moving convoy is achieved using Satellite- BTS to BSC link. This is highly useful to provide communication to the desired destination with the same domestic operator. This provides the roaming facility with out any other service provider. Since All the Communication equipments are accommodated compactly in a transportable vehicle, it can be easily transported anywhere to establish communication link.

The power supply design can be effectively implemented to power the system for providing mobile coverage for the moving convoy using Satellite-BTS to BSC link. This has got wide application, not only for communication front but also to the power requirement of any moving platform with out depending on the shore power or external generator. The compact size gives great saving in space. It can be easily integrated to any vehicle to generate power with little modification. AC / DC power can be generated as required.

The Mobile coverage is provided to the customer irrespective of his location. The system is capable of transmitting voice/data to the public network through Satellite- BTS-to- BSC link. In order to create a moving coverage pattern to follow the convoy, a moving BTS with the traveler is designed in a transportable vehicle. A 4wheel drive vehicle is selected for implementing the design so that it can move easily in any uneven terrain.

The basic principle of implementing mobile coverage moving with convoy is shown in Figure 1. The BTS is housing the radio transceivers which transmits and receives signal on the cells allocated frequencies. This in turn communicates with its BSC at the home location through the satellite link as shown in Figure 1. The BSC manages the radio resource of the BTS and also the connection between the Mobile station (MS) and the external network subsystem. The BSC is interconnected to the Mobile switching center (MSC). It acts as the normal switching node for the mobile or land line telephone in the home network. The detailed description of the schematic in Figure 1 is provided in the subsequent section. All the power generating equipments are optimally designed and accommodated in the limited internal space of the vehicle.

The signal transmitted from the Mobile station (MS) 101 is picked up by the GSM Omini Antenna 102 as shown in Figure 1. The signal is processed by the Micro BTS 103 and is passed to the satellite modem 104. The modem output, the Intermediate Frequency (IF) is up converted and amplified by Block up Converter (BUC) in the TX/RX system 105 to desired satellite communication frequency and then transmitted through the Satellite communication Antenna 106. The Signal is received by the distant Earth station107, fed to Earth Station (ES) receive system108, where it is down converted and demodulated to the desired base band frequency. This base band signal is transmitted to its Base Station controller (BSC) 109. There the signal is processed and switched to the Public network 110, and routed to the desired subscriber 111. The reverse process takes place for receiving the Signal by the transportable Vehicle. The received signal is re transmitted by the omni antenna to the customer handset 101, who is in the vicinity of the radiating range of the Micro BTS.

In order to operate the above systems effectively, Power Supply is essential. Since the requirement is for a continuously moving vehicle, it cannot be met with external wired power supply system, so it is planned to generate the power with in the vehicle itself. The implementation method with appropriate diagram is explained below.

The mobile communication equipments have varied power requirements. Satellite modem 104 and micro BTS 103 operates on 230V AC power. RF Equipments, Antenna Control unit (ACU), Global Positioning System (GPS) and Inertial Measurement Unit (IMU) operate on 24V DC power. The entire power requirement has to be met from the internal resources. To generate 230V AC, a combination of 12V car alternator and inverter is used. As detailed in Figure 2, the car alternator 204 is coupled to the engine to generate 12V which is connected to 12V batteries 209 through a selector switch S3 207. The 12V DC output from the battery is fed to inverters 213/214 via a DPST switch S2 212. 12 Volt DC input to the inverter generates 230V AC output, which is in turn fed to power distribution board 219 via switch S1 216. AC power for the equipment is fed from this distributor 219. Protective fuse of 100 Amps provided along the path. The battery output is simultaneously fed to main and standby inverters as shown in Figure 2, Inverter Output is selected using an SPDT Switch 216 either Inverter 1 or Inverter 2 as required. Inverters can be completely isolated by using input selection DPST switch S2 212. 24V DC power required to operate Antenna controller, GPS, IMU and RF equipments. This is generated using an additional 24V alternator 205 coupled to the engine and placed inside vehicle bonnet. The 24V alternator output is converted to DC and connected to the Battery bank 208 via SPDT switch 206. Two 12V batteries are connected in series to produce 24V DC. This is further protected by 100 Amps fuse and a switch S4. 24V DC is connected to a set of circuit breakers S5 to S7, so that the power can be independently switched to the respective equipments. Provision is made to switch external power source when the vehicle is not in motion. Battery charger 12V 203 and 24V 202 is incorporated to provide 12V and 24V DC to the respective power systems depending on the availability of external power s 201. The physical locations of all these components are shown in Figure 3. A single switch S3 is used to select external or internal power source. Power switching arrangement is shown in Figure 4. This system provides an efficient power system for the equipments on board. External power source can be plugged in thru S 201 when the system is not in motion.

Naturally, without altering the principle of the invention, the embodiments and constructional details may be widely varied with respect to what has been described and illustrated, purely by way of a non-limiting example, without thereby departing from the scope of the invention which is defined in the accompanying claims.

## Claims

1. Design of Power Supply system and its implementation to meet the power requirement for providing mobile coverage of a moving convoy using Satellite -BTS to BSC link.

2. Design of power system of claim 1 wherein 12V DC is generated either using 12V vehicle alternator and 12V Battery combination or alternatively with a 12V Battery charger and a 12V battery.

3. Design of power system of claim 1 wherein 24V DC is generated either with the 24V additional alternator in the vehicle and 2 X 12V Battery or alternatively from a 24V Battery charger with 2 X 12V battery

4. Design of power supply system of claim 1 wherein 230V AC is generated using a set of inverters.

5. Design of power supply system of claim 4 where in the inverter input & output is selected by switching arrangement.

6. Design of power system of claim 1 where in 12V and 24V DC input source selection, internal or external is by switching arrangement.

7. Design of power supply system of claim 1 where in 24V DC distributed to the equipment by set of circuit breakers.

8. Design of power system of claim 1 where in 230V external AC input is selected through switching arrangement.
